Europäisches Patentamt

European Patent Office

Office européen des brevets

(11) Publication number: 0 364 884
A2

# (12) EUROPEAN PATENT APPLICATION

(21) Application number: 89118974.8

(22) Date of filing: 12.10.89

(51) Int. Cl.⁵: G06K 11/08

(30) Priority: 17.10.88 US 259026

(43) Date of publication of application:
25.04.90 Bulletin 90/17

(84) Designated Contracting States:
DE FR GB

(71) Applicant: TEKTRONIX, INC.
Howard Vollum Park 14150 S.W. Karl Braun
Drive P.O. Box 500
Beaverton Oregon 97077(US)

(72) Inventor: Meadows, Robert D.
15115 S.W. Barlow Court
Beaverton Oregon 97005(US)

(74) Representative: Strasse, Joachim, Dipl.-Ing.
Eisenführ, Speiser & Strasse
Zweibrückenstrasse 17
D-8000 München 2(DE)

(54) Detection system for optical touch panel.

(57) The system employs a coherent detection method for detecting beam interruption between the corresponding emitters (16, 24) and detectors (20, 28) of optical touch panel components that are mounted around a display screen (10). The emitted light signals (17, 25) are modulated coherent with a reference signal. The output signals of the detectors (20, 28) are demodulated coherent with the same reference signal. The demodulated output signals are processed to measure the correlation with the modulated emitted signals. A low correlation indicates the emitted beam was interrupted by a stylus (12) placed near the display screen (10).

FIG.1

# DETECTION SYSTEM FOR OPTICAL TOUCH PANEL

Technical Field

This invention pertains to optical touch panels that detect the position of a stylus that is placed near a display screen.

Background Information

Optical touch panel systems have been developed for use as input mechanisms for display devices. Generally, arrays of light emitters and detectors are mounted around the display screen of the display device to establish a plane of light beams passing across and near the display screen. One array of emitters is positioned across the bottom of the screen (in the "X" direction). These emitters may be referred to as X-emitters. An array of X-detectors is positioned across the top of the screen. Another array of emitters is positioned across one side of the screen (in the "Y" direction). These emitters may be referred to as Y-emitters. An array of Y-detectors is positioned across the other side of the screen.

Typically, the X-emitters are sequentially scanned from one side of the display screen to the other. The output signals of the X-detectors are monitored to detect the interruption of any X-emitter beam, the interruption being indicative of the presence of a finger or stylus near the display screen. The Y-emitters are sequentially scanned from the top to the bottom of the display screen. The output signals of the Y-detectors are monitored to detect an interruption of any Y-emitter beam.

Whenever a stylus is placed near the display screen, data representing the location of the interrupted X-emitter beam and of the interrupted Y-emitter beam are transmitted to the display device controller. The data represent the X and Y position coordinates of the stylus. The display is then changed in a predetermined manner in response to the stylus position data.

Conventional optical touch panel systems measure the intensity of the light beams reaching the detectors. A beam is considered interrupted whenever its detected intensity drops below an established threshold level. Therefore, the intensity of the touch panel light emitters must be substantially greater than ambient light level. Furthermore, a threshold level must be established for the detectors because the detectors respond to ambient light near the display screen. Accordingly, the threshold intensity level enables detection of the emitter light as distinguished from the ambient light.

Establishing the appropriate threshold intensity level within the detection circuitry of the touch panel system is difficult because ambient light levels in the vicinity of the display screen may change. Variations in standard emitter and detector components further complicate calibration of the detectors. Further, the calibration technique must account for slight variations in the alignment of any emitter/detector pairs because the intensity of the light reaching the detector will change with changes in that alignment.

In addition to establishing threshold detection levels, conventional optical touch panel systems typically employ infrared light emitting and detecting components to eliminate the effects of visible ambient light.

Summary of the Invention

This invention is directed to a detection system for an optical touch panel, which system is effective for detecting the interruption of the emitted light beams substantially independent of ambient light conditions. Accordingly, the system substantially eliminates the need for complex calibration equipment to account for ambient light conditions and to account for changes in those conditions. Furthermore, the system can utilize a light emitting source of substantially lower power than the ambient light level.

The system of the present invention is adaptable for use with standard light emitters and detectors and employs a coherent detection method for detecting beam interruption between corresponding emitters and detectors. To this end, the system includes components for modulating the emitted light coherent with a reference signal and for demodulating, coherent with that same reference signal, the output signal of the detectors. Ambient light, which is not coherent with the reference signal, is rejected. Each demodulated output signal is processed to determine the phase correlation between the emitted light beam and the corresponding detector output signal, a low correlation indicating an interrupted beam.

Because the intensity of the light beams is not a critical element in the present detection system, slight variations in the emitter/detector alignment will have no deleterious effect on system performance. Further, visible light emitters and detectors may be used with the present invention.

Brief Description of the Drawing

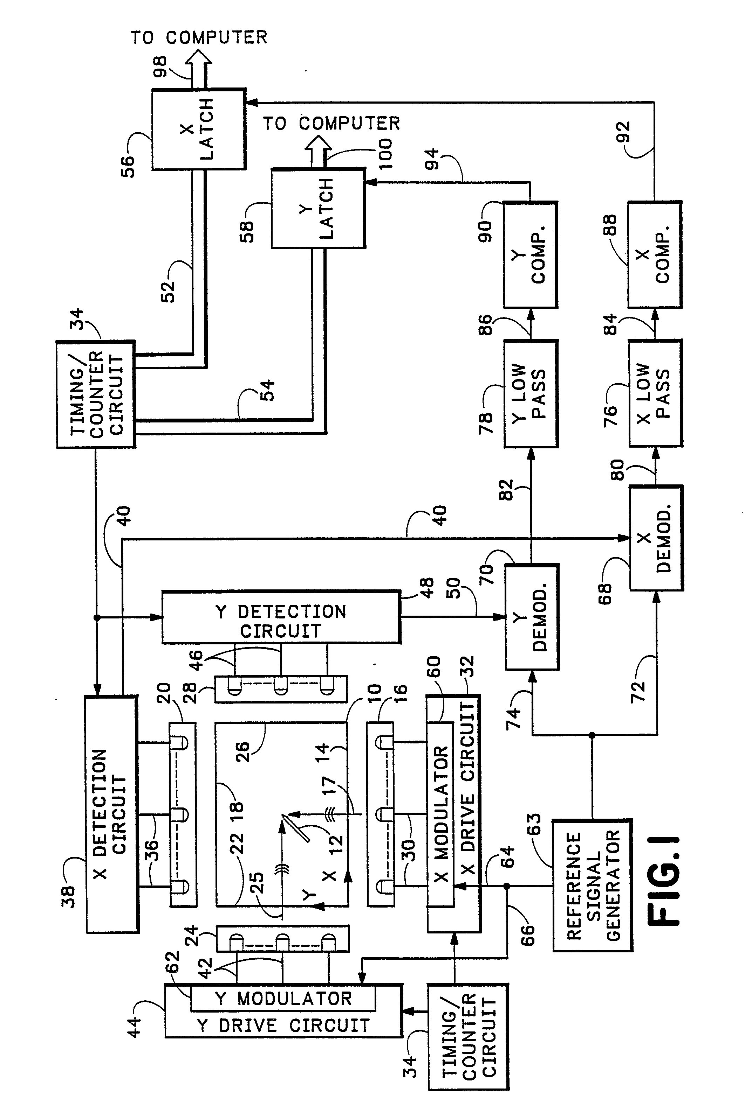

Fig. 1 is a block diagram of the system of the present invention.

Detailed Description of Preferred Embodiment

With reference to Fig. 1, the system of the present invention is adaptable for use with a display screen 10, such as the video display of a computer terminal. The images displayed are controlled by the computer (not shown). Whenever user input is required, the computer generates one or more images on the screen. The user places a finger or stylus 12 near a selected image on the screen 10. It is the function of an optical touch panel system to determine the position of the stylus 12 in terms of the X and Y position coordinates of the screen 10, and to provide the position coordinates to the computer so that the display can be changed in accordance with the input represented by the stylus position.

Mounted along the bottom 14 of the display screen 10 is a linear array of light emitters 16, preferably light emitting diodes. These emitters 16 lie parallel to the X axis (the orthogonal X and Y axes illustrated in the lower left-hand corner of the display screen 10) and are hereafter referred to as X-emitters 16.

Mounted along the top 18 of the display screen 10 is a linear array of light detectors 20, preferably photodiodes. These detectors 20 are also parallel to the X axis and are hereafter referred to as X-detectors 20.

Mounted along one side 22 of the display screen 10 is another linear array of light emitters 24. These emitters lie parallel to the Y axis and are hereafter referred to as Y-emitters 24. Mounted along the opposite side 26 of the display screen 10 is another linear array of light detectors 28 that lie parallel to the Y axis and are hereafter referred to as Y-detectors 28.

It is noteworthy here that, unlike prior systems, visible-light emitters and detectors may be selected for the system of the present invention because, as will become clear upon reading this description, the present system does not rely upon light intensity detection. As is known, detection of the intensity of visible light is very sensitive to changes in ambient light.

There is an equal number of X-emitters 16 and X-detectors 20, but the total number will vary depending upon the size of the display screen 10. Similarly, there is an equal number of Y-emitters 24 and Y-detectors 28.

All of the X-emitters 16 are connected via lines 30 to an X drive circuit 32 that includes a known combination of components for transmitting electrical signals along lines 30 in a manner such that the X-emitters 16 are sequentially activated to direct light beams 17 across the screen toward the corresponding X-detectors 20.

The timing of the X drive circuit 32 is controlled by a timing/counter circuit 34, which comprises conventional components for delivering clock pulses to the X drive circuit 32. As will become clear upon reading this description, the timing/counter circuit 34 delivers clock pulses to all of the emitter drive and detection circuits so that those circuits may be synchronized for accurately scanning the display screen 10 with light beams.

The output signals of the X-detectors 20 are applied via lines 36 to an X detection circuit 38. As known in the art, the X detection circuit 38 may include a multiplexer, the data-select inputs of which are synchronized via timing/counter circuit 34 with the X drive circuit 32 in order to gate to output line 40 the output signal of the single X-detector that is aligned with the simultaneously activated single X-emitter.

Turning now to the Y-emitters 24 and Y-detectors 28, all of the Y-emitters 24 are connected via lines 42 to an Y drive circuit 44 that includes a known combination of components for transmitting electrical signals along lines 42 in a manner such that the Y-emitters are sequentially activated to direct light beams 25 across the display screen 10 toward the corresponding Y-detectors 28.

The output signals of the Y-detectors 28 are applied via lines 46 to an Y detection circuit 48. As is known in the art, the Y detection circuit 48 may include a multiplexer, the data-select inputs of which are synchronized via timing/control circuit 34 with the Y drive circuit 44 to gate to output line 50 the output signal of the single Y-detector that is aligned with the simultaneously activated single Y-emitter 24.

The timing/counter circuit 34 continuously applies to lines 52 and 54 a binary count that corresponds to the particular X-emitter or Y-emitter, respectively, that is being activated at that time. The binary count corresponding to the X-emitter is applied via lines 52 to a X latch 56, which is enabled to receive the count as hereafter described. The binary count corresponding to the Y-emitter is applied via lines 54 to a Y latch 58, which is enabled as hereafter described.

The detection system of the present invention includes an X modulator 60 and a Y modulator 62 for modulating the electrical signals that respectively drive the X-emitter and the Y-emitters. Accordingly, the light beams 17, 25 are likewise modulated. A reference signal generator 63 applies a reference signal to lines 64 and 66 for driving the X and Y modulators 60, 62. Preferably, the reference signal has a frequency within 10 kHz to 100 kHz.

The output signals of the X detection circuit 38, which appear on line 40 are applied to an X demodulator 68. The output signals of the Y detection circuit 48, which appear on output line 50 are applied to a Y demodulator 70. The X demodulator 68 and the Y demodulator 70 are driven by the same reference signal that drives the X modulator 60 and the Y modulator 62, that signal being applied along lines 72 and 74. As a result, the X and Y modulators 60, 62 and X and Y demodulators 68, 70 are coherent with the reference signal. Preferably, the X and Y demodulators 68, 70 are locked in phase with the corresponding X and Y modulators 60, 62.

Further, the output signals from the X demodulator 68 and the output signals from the Y demodulator 70 have dc components that are proportional to the amplitude of the corresponding modulated signals of the X-emitters 16 and Y-emitters 24. The dc component of each modulated output signal is extracted via an X low pass filter 76 and a Y low pass filter 78, which filters receive those signals on lines 80 and 82, respectively.

In view of the above, it can be appreciated that the X and Y demodulators 68, 70 with low pass filters 76, 78 serve to detect only light signals that are coherent with the modulated light from the corresponding X-emitters 16 and Y-emitters 24, and to reject non-coherent ambient light.

It can be appreciated that whenever a light beam from an X-emitter 16 traverses the display screen 10 without stylus interruption, that signal is detected and there will be a high correlation between the (modulated) emitter signal and the (demodulated) detector output signal, hence, a correspondingly high dc component appearing on the associated X low pass filter 76 output line 84. Similarly, whenever a light beam from a Y-emitter 24 traverses, uninterrupted, the display screen 10 and is detected, there will be a high correlation between the (modulated) emitter signal and the (demodulated) detector output signal, hence, a correspondingly high dc component appearing on the Y low pass filter output line 86. The X and Y low pass filter output signals are hereafter referred to as "X correlation signals" and "Y correlation signals," respectively. The magnitude of the X and Y correlation signals depends upon the selected reference signal amplitude and is not a critical design feature.

The X correlation signals are applied via line 84 to an X comparator 88 and the Y correlation signals are applied via line 86 to a Y comparator 90. The X and Y comparators 88, 90 serve to compare each X correlation signal and each Y correlation signal, respectively, to a reference level that is selected so that the associated X or Y correlation signals will fall below that reference level whenever the X or Y beams are interrupted (i.e., whenever there is low emitter/detector signal correlation).

Whenever an X correlation signal falls below the X comparator reference level, an enable signal is generated by the comparator 88 and is applied to the X latch 56 via line 92. The output 98 of the enabled X latch 56 will then carry the binary count that corresponds to the particular X emitter that emitted the beam that was interrupted by the stylus 12. Similarly, whenever a Y correlation signal falls below the Y comparator reference level, an enable signal is generated by the Y comparator 90 and is applied via line 94 to the Y latch 58. The output 100 of the enabled Y latch 58 will then carry the binary count that corresponds to the particular Y emitter that emitted the beam that was interrupted by the stylus 12.

The binary counts appearing on the respective output lines 98, 100 of the X latch 56 and Y latch 58 are coded and transmitted to the computer. The computer processes the information and thereafter changes the display accordingly. In situations where a relatively wide stylus interrupts more than one beam traveling in the X or Y direction, the computer is provided with the binary counts of all interrupted beams (alternatively, with the counts of the first and last of the group of interrupted beams), from which counts the position of the center of the stylus is calculated.

While the present invention has been described in relation to a preferred embodiment, it is to be understood that various alternatives, substitutions of equivalents and other changes can be made without departing from the spirit and scope of the invention.

## Claims

1. A detection system for an optical touch panel comprising:

(a) an array of light-emitting elements mountable along one side of a display screen;

(b) drive circuit means associated with the light-emitting elements for activating the light-emitting elements to emit light signals across the screen;

(c) an array of light-detecting elements mountable along the side of the screen opposite the light-emitting elements, each light-detecting element corresponding to an opposing light-emitting element and producing a corresponding output signal in response to receiving a light signal from the light-emitting element;

(d) detection circuit means for detecting the output signals of the light-detecting elements; and

(e) coherent detecting means associated with the drive circuit means and the detection circuit means for modulating the light signals coherent with a reference signal and for demodulating the corresponding output signals coherent with the reference signal, and for processing the demodulated output signals to produce a correlation signal that is indicative of the extent of correlation between each modulated light signal and the associated demodulated output signal.

2. The system of claim 1 further including latch means operable upon receipt of an enabling signal for storing positional data corresponding to each activated light-emitting element in the array, the coherent detecting means including correlation signal processing means for comparing the value of the correlation signal with a preselected reference level and for selectively directing an enabling signal to the latch means depending upon the results of the comparison.

3. The system of claim 1 wherein the light emitting elements emit visible light.

FIG.I

EP 0 364 884 A2